# FASCICULE DE BREVET EUROPEEN

(11) **EP 0 588 732 B1**
(45) Date de publication et mention de la délivrance du brevet: **05.11.1997**
(21) Numéro de dépôt: 93420365.4
(22) Date de dépôt: 10.09.1993
(51) Int. Cl.: G01N 29/22, G10K 11/30, G10K 11/32

(54) **Procédé de contrôle ultrasonore d'une pièce métallique**
Verfahren zur Ultraschallprüfung eines Metallteiles
Method of ultrasonic testing of a metal piece

(30) Priorité: 14.09.1992 FR 9211117
(43) Date de publication de la demande: 23.03.1994
(73) Titulaire: Compagnie Européenne du Zirconium CEZUS, F-92400 Courbevoie (FR); FRAMATOME, 92084 Courbevoie (FR)
(72) Inventeur: Vinot, Jacques, F-73200 Gilly/Isere (FR); Moisson, Christian, F-73200 Cesarches (FR); Eymond, Christian, F-73200 Albertville (FR)
(74) Mandataire: Mougeot, Jean-Claude

(56) Documents cités:
- FR-A- 2 298 921
- FR-A- 2 650 144
- ULTRASONICS vol. 30, no. 2 , Mars 1992 pages 91 - 94 XP267461 C.K.JEN ET AL. 'Acoustic waveguiding rods with graded velocity profiles'

## Description

L'invention se situe dans le domaine des contrôles non destructifs de pièces métalliques et plus précisément de leur contrôle ultrasonore en immersion dans un liquide de couplage tel que de l'eau.

Par le document FR-A-2650144, on connaît une méthode de contrôle ultrasonore en immersion d'une pièce métallique au moyen d'au moins un transducteur émettant des ondes ultrasonores dans la pièce. Ce document enseigne l'emploi d'un transducteur focalisant en un point intérieur à la pièce, les points de la surface émettrice de ce transducteur étant à équidistance acoustique de ce point intérieur.

Par ailleurs pour s'assurer de l'état de santé en profondeur des soudures de pièces métalliques FR-A-2298921 réalise un contrôle ultrasonore par immersion, en mettant en oeuvre plusieurs transducteurs émettant des ondes ultrasonores focalisées dans la pièce et formant des taches focales qui sont échelonnées le long de la soudure selon la profondeur à contrôler à l'intérieur de la pièce.

En pratique, le «point de focalisation» ou foyer de chaque transducteur est entouré d'un volume acoustique comportant une tache focale allongée selon l'axe de propagation des ultrasons, et la géométrie et la structure acoustique de cette tache focale rendent difficile et hasardeux le contrôle ultrasonore de pièces telles que des grosses barres en alliages de titane destinées à la fabrication de pièces finies ou éléments pour usage aéronautique, ce contrôle devant obéir à des exigences sévères de qualité.

La demanderesse a cherché à résoudre les difficultés correspondantes, et à améliorer la reproductivité et la précision de tels contrôles ultrasonores en immersion.

L'invention donnant une solution à ce problème a pour objet un procédé de contrôle ultrasonore en immersion de la santé d'une barre métallique au moyen de plusieurs transducteurs émettant des ondes ultrasonores focalisées dans la barre et formant des taches focales qui sont échelonnées selon la profondeur à contrôler dans ladite barre caractérisé en ce qu'après avoir réglé :
. la section S de chaque tache focale à -6dB, mesurée perpendiculairement à l'axe de propagation des ondes ultrasonores, à au plus 25 mm²,
. la fréquence de chaque transducteur focalisant (20 à 23) à haut faisceau d'énergie entre 3 et 8 Mhz,
. les intervalles de profondeur d'observation à partir d'un étalon de manière à assurer le recouvrement en profondeur de chaque tache focale (9, 10) à -6dB,
on contrôle tout le volume intérieur de la barre à l'exception d'une zone superficielle de profondeur inférieure à 10 mm en déplaçant l'ensemble desdits transducteurs par rapport à la pièce de façon à obtenir un pas de contrôle de longueur inférieure ou égale à 0,7 fois la racine carrée de ladite section S de la tache focale à -6dB de chacun desdits transducteurs.

Chaque transducteur focalisant dans la pièce métallique contrôlée, ou dans une pièce de réglage ou pièce-étalon de même nature et de même géométrie pour le contrôle comportant un défaut de référence, a autour de son foyer ponctuel ou de faible volume une tache focale dans laquelle l'amplitude des vibrations ultra-sonores décroit quand on s'éloigne dudit foyer. Cette tache focale est ainsi définie selon la décroissance maximale de ladite amplitude par rapport à l'amplitude au foyer, cette décroissance qualifiant l'état de vibrations de sa surface enveloppe. Le niveau "-6 dB" correspond ainsi à 50 % d'amplitude relative. Pour avoir un contrôle précis du volume intérieur de la pièce, il faut avoir des taches focales à -6 dB consistant d'abord en des volumes en vibration suffisamment concentrés transversalement, soit de section perpendiculaire à l'axe de propagation des ultra-sons inférieure à 40 mm2. Il faut en même temps que ces taches focales, allongées selon l'axe de propagation et ayant typiquement une forme bombée ou cylindrique dans leur partie médiane et effilée à la façon d'un ballon de rugby de part et d'autre de cette partie médiane, soient échelonnées selon la profondeur à contrôler dans la pièce.

Le choix de la concentration de la focalisation dans la pièce est de préférence fait en limitant ladite section de la tache focale à moins de 25 fois la surface réfléchissante d'un défaut de référence à détecter, par exemple moins de 28,2 mm2, de 19,6 mm2 ou de 12,5 mm2 selon que ce défaut est un trou à fond plat de diamètre respectivement égal à 1,2 mm, 1 mm ou 0,8 mm, ou encore en limitant ladite section à moins de 25 mm2, ce qui permet une amélioration de concentration convenant à la plupart des contrôles ultrasonores de la santé de pièces métalliques.

Le contrôle intégral de la santé de l'intérieur d'une pièce, à l'exclusion d'une zone superficielle de profondeur choisie, impose que les transducteurs utilisés aient des taches focales, décrites ci-dessus, dont les étendues se recouvrent selon leurs profondeurs, c'est à dire leurs intervalles de profondeur, dans la pièce. On verra plus loin que dans le cas des alliages de titane à caractéristiques élevées, dont la somme des éléments d'alliage dépasse habituellement 9 % en masse, le problème du bruit ou de l'herbe correspondant à des réflexions successives sur les faces des cristaux et, semble-t-il, aussi à des émissions ultra-sonores des parties effilées ou en pointe de certains cristaux entrainés en vibration, a une importance très grande et conduit à des règles plus restrictives dans le cas où le contrôle doit être très fin.

De façon générale, les transducteurs focalisants comportent une pastille piézoélectrique ayant une fréquence propre de résonance ou vibration ultrasonore, typiquement comprise entre 2 et 20 MHz. Selon une modalité habituelle, on trouve dans un transducteur un bloc amortisseur derrière la pastille et une lentille focalisatrice devant la pastille, le montage dans le boitier du transducteur comprenant ainsi deux interfaces pour la pastille. Le transducteur a une fréquence centrale d'émission et de réflexion dans la pièce contrôlée, c'est la "fréquence du transducteur" qui diffère de celle de sa pastille vibrante et est alors comprise entre 2 et 15 MHz.

La surface émettrice de chaque transducteur focalisant, c'est à dire la surface émettrice de sa lentille focalisatrice selon la modalité habituelle, est de préférence définie et obtenue en fonction de la géométrie de la pièce à contrôler et de la profondeur à contrôler ou profondeur de la tache focale dans cette pièce. Connaissant la position du transducteur vis à vis de la pièce dans le contrôle en immersion et la position de son foyer dans la pièce, on impose que les autres points de la surface émettrice du transducteur soient équiphases sur le trajet du point focal.

Selon une modalité particulièrement avantageuse, la pastille piézoélectrique comporte elle-même la surface émettrice focalisante à distances acoustiques équiphases du foyer dans la pièce contrôlée, cette pastille ayant des rainures croisées, formant un quadrillage, remplies de matière plastique et débouchant sur ladite surface émettrice. Les rainures du matériau piézoélectrique font vibrer cette matière plastique qui a un bon couplage avec l'eau et l'amortissement est amélioré. Avec une excitation comparable, on obtient un faisceau d'énergie typiquement 8 à 12 fois plus forte qu'avec la modalité habituelle.

Vis à vis des exigences rencontrées dans les contrôles ultra-sonores de santé des pièces en immersion, on préfère utiliser des ondes longitudinales, chaque transducteur émettant des ondes se propageant selon une direction voisine d'une perpendiculaire à la surface de la pièce et détectant les ondes réfléchies dans la pièce.

On contrôle ainsi des barres en alliage de titane de diamètre compris entre 50 et 400 mm.

Dans le cas général des transducteurs focalisants à distances acoustiques constantes du foyer dans la pièce contrôlée, chaque transducteur a une fréquence de préférence comprise entre 2 et 15 MHz.

Dans le cas des barres en alliages de Titane précédentes, on a trouvé plus avantageux d'utiliser des transducteurs de fréquence comprise entre 3 et 8 MHz, leurs taches focales à -6 dB ayant une section perpendiculaire à l'axe de propagation des ultra-sons inférieure ou égale à 25 mm2. Lorsqu'on veut améliorer le rapport signal/bruit et de ce fait améliorer la finesse de détection des défauts réfléchissant les ultra-sons, on s'est aperçu que, pour les barres en alliage de titane, la réduction de l'intervalle de profondeur d'observation de chaque transducteur à une fraction de sa profondeur de focalisation à -6 dB avait un effet très important. Ainsi, pour les barres en alliage de titane de diamètre compris entre 250 et 400 mm, on règle de préférence l'intervalle de profondeur d'observation ou "fenêtre de contrôle" de chaque transducteur à une valeur comprise entre 1/15 et 1/2 et de préférence entre 1/15 et 1/8 de sa profondeur de focalisation à -6 dB dans le métal.

Pour effectuer le contrôle en immersion d'une barre en alliage de titane, on contrôle effectivement la santé de tout le volume inférieur de la barre à l'exception d'une zone superficielle de profondeur intérieure à 10 mm en déplaçant l'ensemble des transducteurs par rapport à la pièce de façon à obtenir un pas de contrôle de longueur inférieure ou égale à 0,7 fois la racine carrée de la section perpendiculaire à l'axe de propagation de la tache focale à -6 dB de chaque transducteur, cette condition s'appliquant alors à la section la plus faible. Les transducteurs à équidistance acoustique ont des taches focales légèrement ovalisées, avec typiquement largeur/longueur supérieur à 0,6 ,ce qui permet d'adopter une telle règle pratique pour le recouvrement transversal des trajectoires de contrôle.

Dans le cas des barres en alliage de titane de diamètre compris entre 250 et 400 mm, ayant une surface de courbure relativement faible, la zone superficielle non inspectée a une profondeur choisie entre 1,5 et 10 mm en utilisant de préférence un transducteur à surface émettrice appartenant à une pastille piézoélectrique à rainures affleurantes remplies de matière plastique, dans le cas où cette profondeur est inférieure à 3 mm. On contrôle alors tout le volume intérieur à l'exception de la zone superficielle précédente en déplaçant l'ensemble des transducteurs en translation parallèle à l'axe longitudinal de la barre et en faisant en même temps tourner la barre sur elle-même de façon à obtenir un contrôle selon des trajectoires hélicoîdales desdits transducteurs par rapport à la barre, ces trajectoires ayant un même pas de longueur inférieure ou égale à 0,7 fois la racine carrée de ladite section de la tache focale à -6 dB de chacun des transducteurs.

L'invention a encore pour objet l'utilisation du procédé précédent selon l'une quelconque de ces modalités pour donner une garantie de santé de tout l'intérieur d'une pièce, pleine ou tubulaire, à l'exception d'une zone superficielle de cette pièce de profondeur inférieure à 10 mm, cette méthode de contrôle étant qualifiée ou repérée pour chaque transducteur par rapport à un trou à fond plat réfléchissant de diamètre inférieur ou égal à 1,2 mm. En particulier, dans le cas d'une barre en alliage de titane de diamètre compris entre 50 et 400 mm, et de préférence à l'aide des modalités décrites ci-dessus pour le contrôle de ces barres, cette méthode est qualifiée par rapport à un trou à fond plat de diamètre inférieur ou égal à 1 mm et de préférence compris entre 0,7 et 1 mm.

L'avantage principal de l'invention est de donner en contrôle ultra-sonore une garantie de santé de tout le volume utile d'une pièce par rapport à un défaut de référence de surface très faible, même dans le cas où la nature et la structure de la pièce métallique sont défavorables (pièces et en particulier barres en alliage de titane de résistance mécanique élevée) et où en même temps la profondeur à contrôler est importante (diamètres 250 à 400 mm).

### EXEMPLES

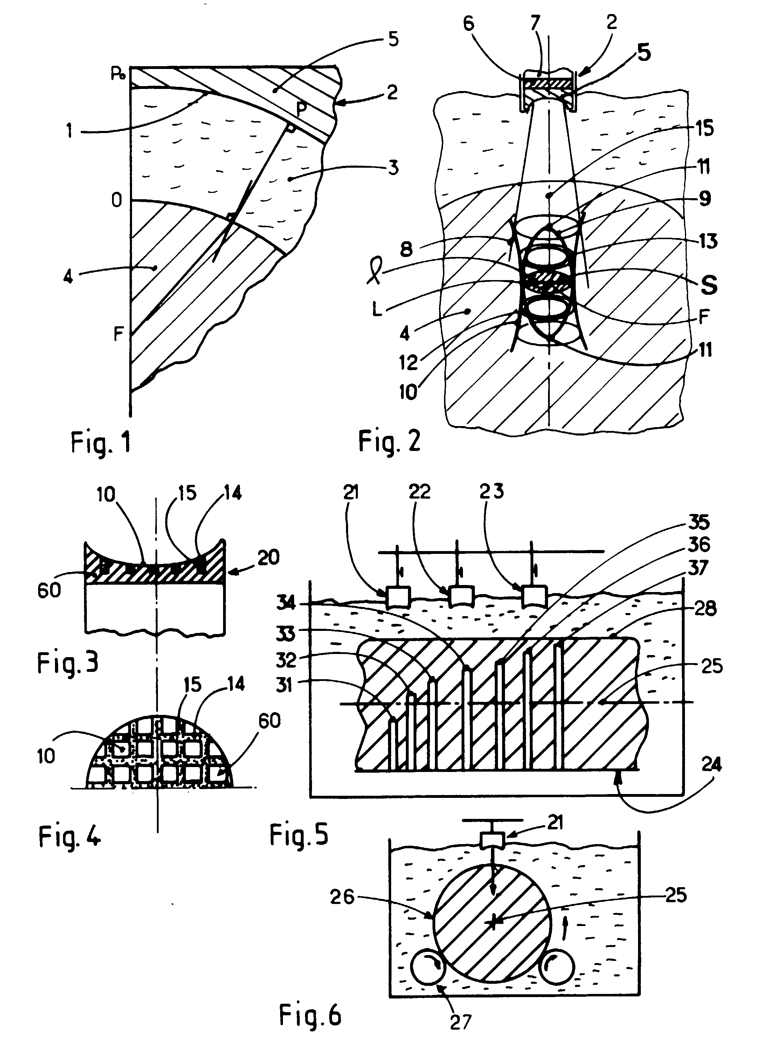

. La figure 1 représente un transducteur focalisant dans une pièce avec des distances acoustiques constantes, en demi-coupe axiale.
. La figure 2 représente la tache focale d'un tel transducteur focalisant à l'intérieur d'une pièce, en coupe axiale du transducteur et transversale de la pièce, la tache focale étant en perspective cavalière.
. La figure 3 représente un transducteur focalisant à pastille émettrice à rainures croisées remplies de matière plastique, en coupe axiale.
. La figure 4 représente la face émettrice de cette pastille, en demi-vue de dessus.
. La figure 5 représente une disposition de réglage du contrôle à 3 transducteurs focalisants d'une barre en alliage de titane, ce réglage étant fait sur une barre témoin percée de trous à fond plat de référence, en coupe axiale de cette barre témoin.
. La figure 6 représente une disposition de contrôle ultrasonore en continu d'une barre, en coupe perpendiculaire à l'axe de la barre.

1) Sur la figure 1, on peut voir la surface émettrice 1 du transducteur focalisant 2 plongée dans l'eau 3 au-dessus d'une barre 4 à contrôler aux ultra-sons. L'onde émise par le centre Po de la surface émettrice 1 de la lentille focalisatrice 5 focalise dans la pièce en un même point F que les ondes émises par les autres points tels que P de la surface émettrice 1, la condition de distance acoustique constante entre P quelconque et F étant remplie.
2) Sur la figure 2, on a schématisé le champ acoustique obtenu dans la barre 4. Le transducteur focalisant 2 comprend à l'arrière de sa lentille focalisatrice 5 une pastille résonante piézoélectrique 6 et un bloc amortisseur 7. Le champ acoustique 8 comprend une tache focale 9 entourant le foyer F, schématisée selon son enveloppe à -6 dB par rapport à ce foyer F. On a représenté aussi cette tache focale à -6 dB telle qu'elle est obtenue, avec le contour 10, au moyen d'un réglage de gain en fonction de la profondeur, cette tache focale 10 étant quasi-cylindrique sur une grande partie de sa hauteur, et ici légèrement évasée au niveau des extrémités effilées 11 de la tache 9 avant correction. En outre, la figure montre l'effet d'un règlage de l'intervalle de profondeur d'observation du transducteur à une fraction de la profondeur de focalisation, c'est à dire de la profondeur de la tache focale 9 : lorsqu'on limite cet intervalle par les niveaux de profondeur 12 et 13, avant ou après correction, on réduit les variations de largeur de la tache focale 9 ou 10 dans cet intervalle liées à l'augmentation du gain de part et d'autre du foyer F, cette modification permettant une augmentation du rapport signal/bruit et donc une amélioration de la sensibilité de détection.
3) Sur les figures 3 et 4, on peut voir une pastille piézoélectrique 60 utilisée comme lentille focalisatrice du transducteur 20, ce transducteur 20 comportant des rainures croisées 14 remplies de matière plastique 15, ces rainures 14 débordent sur la surface émettrice 10 qui est à distance acoustique constante d'un point intérieur à la pièce à contrôler aux ultra-sons en immersion. On a indiqué précédemment les performances en énergie ultra-sonore émise et en amortissement d'une telle pastille 60 et d'un tel transducteur 20.

### 4) Contrôle ultra-sonore de la santé de barres en alliage de titane de diamètre 330 mm (figures 5 et 6)

Il s'agit de l'alliage de Ti ayant des teneurs moyennes en masse de 6% d'Al et 4% de V. Les barres sont destinées à la fabrication de composants pour une application aéronautique. Elles ont été corroyées, de sorte que les défauts éventuels à détecter sont des fissures ou des inclusions généralement allongées ou orientées dans la direction axiale de ces barres, le contrôle par des ondes ultrasonores radiales pouvant alors détecter leurs surfaces réfléchissantes axiales.

On a utilisé pour ce contrôle trois transducteurs focalisant 21, 22, 23 à surfaces émettrices de distance acoustique constante par rapport à des foyers de profondeur échelonnée dans la pièce contrôlée, ces transducteurs 21, 22, 23 de 5 MHz chacun ayant été préparés spécialement par un fabricant et fournis avec des renseignements sur leur focalisation et en particulier sur leurs taches focales à -6 dB.

On a utilisé pour les règlages d'intervalle de profondeur d'observation de chaque transducteur et pour des règlages de gain en fonction de la profondeur une portion de barre 24 prises comme étalon et comportant sept trous radiaux à fond plat (TFP, ou en anglais "flat bottom hole" = FBH) de profondeurs échelonnées, les fonds plats 31 à 37 de ces trous de diamètre 1,2 mm étant aux profondeurs suivantes par rapport à la génératrice 28 de sondage contenue dans leur plan axial :

| | |
|---|---|
| "31" | 177 mm ; |
| "32" | 131 mm ; |
| "33" | 86 mm ; |
| "34" | 64 mm ; |
| "35" | 43 mm ; |
| "36" | 26 mm ; |
| "37" | 8 mm ; |

Des recouvrements en profondeur étaient assurés entre les intervalles d'observation ou "fenêtres de contrôle", les fonds plats 33 et 35 étant observés chacun par deux transducteurs, respectivement 21 et 22 et 22 et 23. Les observations faites à l'aide de ces TFP ont permis de préciser les positions en profondeur des taches focales des trois transducteurs 21, 22, 23, les indications de profondeur du fabricant étant approximatives du fait de son mode d'analyse qui comporte une détection dans l'eau des ondes transmises à travers une portion de barre limitée par une face inférieure plane.

Le Tableau 1 rassemble les intervalles de profondeur des taches focales à -6 dB des trois transducteurs, les intervalles d'observation ou "fenêtres de règlage" choisis, et les dimensions principales des sections S des taches focales à -6 dB perpendiculaires à l'axe de propagation (15) des ondes ultra-sonores, ces sections S étant un peu ovalisées et leur longueur L et largeur 1 (fig. 2) concernant respectivement leur direction perpendiculaire à l'axe longitudinal 25 de la barre étalon 24 ou de la barre contrôlée 26 et la direction de cet axe 25.

Le contrôle ultrasonore des barres 26 (fig. 6) est effectué en faisant tourner chaque barre 26 sur elle-même au moyen de galets 27, à la vitesse périphérique de 1 m/s, l'ensemble des transducteurs 21 à 23 se déplaçant en translation parallèle à l'axe 25, ce qui donne une exploration hélicoïdale de pas 2,27 mm, inférieur à 0,7 fois la racine carrée de la section S de de la tache focale du transducteur contrôlant la zone centrale de la barre.

**Tableau 1**

| Repère du transducteur | Intervalle de profondeur à -6 dB de la tache focale (mm) | Intervalle de profondeur d'observation (mm) | Position en profondeur du foyer (mm) | Section à -6 dB de la tache focale | | |
|---|---|---|---|---|---|---|
| | | | | L (mm) | l (mm) | S (mm2) |
| 21 | 75 à 185 | 81 à 177 | 139 | 6 | 4 | 19,5 |
| 22 | 35 à 105 | 38 à 91 | 81 | 5 | 3,2 | 13 |
| 23 | 0 à 70 | 6 à 48 | 37 | 4,2 | 3,8 | 12,6 |

Le contrôle à 100% du volume des barres, à l'exception de la couche de surface de profondeur inférieure ou égale à 6 mm, est ainsi réalisé avec de bons recouvrements en profondeur et selon la direction axiale. Le rapport signal du TFP de diamètre 1,2 mm sur le bruit est de 4 dB, ou encore le bruit est de même niveau que l'écho d'un TFP de diamètre 0,95 mm, assurant le niveau de contrôle souhaité.

### 5) Essai complémentaire de contrôle, concernant les mêmes barres de diamètre 330 mm

Avec un quatrième transducteur du même type que les transducteurs 21 à 23 et également de 5 MHz, ayant un intervalle de profondeur de focalisation à -6 dB de 130 mm encadrant l'axe 25 de la barre et une section de tache focale ovalisée de 7,6 mm x 4,4 mm, on a pris comme témoin un trou à fond plat de diamètre 0,8 mm, ce fond plat étant situé à 151 mm de profondeur. On a limité l'intervalle de profondeur d'observation à 146 à 156 mm de profondeur, soit à 1/13 de l'intervalle de profondeur à -6 dB du transducteur. On a alors constaté une amélioration surprenante de la sensibilité de détection, le rapport signal sur bruit relatif au trou à fond plat de diamètre 0,8 mm étant très bon avec un bruit de même niveau qu'un trou à fond plat de diamètre 0,5 mm. L'effet supposé de ce type de réduction de l'intervalle d'observation a été commenté à propos de la figure 2, le résultat pratique est inattendu et permet de conclure que, même avec des réductions de l'intervalle d'observation plus faibles, et au prix d'une augmentation du nombre de transducteurs à intervalles de profondeurs d'observation échelonnées, on peut obtenir des améliorations de la sensibilité du contrôle ultra-sonore et de la garantie santé attachée à ce contrôle.

## Revendications

1. Procédé de contrôle ultrasonore en immersion de la santé d'une barre métallique (4, 24, 26) au moyen de plusieurs transducteurs (2, 20, 21 à 23) émettant des ondes ultrasonores focalisées dans la barre et formant des taches focales (9, 10) qui sont échelonnées selon la profondeur à contrôler dans ladite barre caractérisé en ce qu'après avoir réglé :
. la section (S) de chaque tache focale à -6dB, mesurée perpendiculairement à l'axe de propagation (15) des ondes ultrasonores, à au plus 25 mm²,
. la fréquence de chaque transducteur focalisant (20 à 23) à haut faisceau d'énergie entre 3 et 8 Mhz,
. les intervalles de profondeur d'observation à partir d'un étalon de manière à assurer le recouvrement en profondeur de chaque tache focale (9, 10) à -6dB,
on contrôle tout le volume intérieur de la barre (26) à l'exception d'une zone superficielle de profondeur inférieure à 10 mm en déplaçant l'ensemble desdits transducteurs (21 à 23) par rapport à la pièce (26) de façon à obtenir un pas de contrôle de longueur inférieure ou égale à 0,7 fois la racine carrée de ladite section (S) de la tache focale à -6dB de chacun desdits transducteurs (21 à 23).

2. Procédé selon la revendication 1 dans laquelle chacun desdits transducteurs (2, 20, 21 à 23) a une surface émettrice (1, 10) dont les points (P) sont à distance acoustique, mesurée dans l'eau et dans la pièce (4, 24, 26), constante du centre (F) de chaque dite tache focale (9, 10).

3. Procédé selon la revendication 2 dans laquelle ladite surface émettrice (10) appartient à une pastille piézoélectrique (60) comportant des rainures croisées (14) remplies de matière plastique (15) et débouchant sur ladite surface (10).

4. Procédé selon l'une quelconque des revendications 2 ou 3, dans laquelle on utilise des ondes ultrasonores longitudinales, chaque transducteur (2, 20, 21 à 23) émettant des ondes se propageant selon une direction voisine d'une perpendiculaire à la surface de la pièce (4, 24, 26) et détectant les ondes réfléchies dans la pièce.

5. Procédé selon l'une quelconque des revendications 1 à 4, dans laquelle ladite pièce (26) est une barre (26) en alliage de Ti de diamètre compris entre 50 et 400 mm.

6. Procédé selon la revendication 1 dans laquelle on améliore la précision du contrôle en réglant l'intervalle de profondeur d'observation de chaque transducteur à une fraction de la profondeur de focalisation à -6dB dudit transducteur.

7. Procédé selon la revendication 6, appliqué au contrôle d'une barre (26) de diamètre compris entre 250 et 400 mm, dans laquelle on règle ledit intervalle à 1/15 à 1/2 de ladite profondeur de focalisation à -6dB.

8. Procédé selon la revendication 1 ou 7 dans lequel on contrôle tout le volume intérieur de la barre (26) à l'exception d'une zone superficielle de profondeur choisie entre 1,5 et 10 mm en déplaçant l'ensemble des transducteurs (21 à 23) en translation parallèle à l'axe longitudinal (25) de la barre (26) et en faisant en même temps tourner la barre sur elle-même de façon à obtenir un contrôle selon des trajectoires hélicoïdales desdits transducteurs (21 à 23) par rapport à la barre (26), ces trajectoires ayant un même pas de longueur inférieure ou égale à 0,7 fois la racine carrée de ladite section de la tache focale à -6dB de chacun des transducteurs (21 à 23).

9. Utilisation du procédé de l'une quelconque des revendications 1 à 4 pour donner une garantie de santé de tout l'intérieur d'une barre métallique (26) à l'exception d'une zone superficielle de cette pièce de profondeur inférieure à 10 mm, ce procédé de contrôle étant qualifié pour chaque transducteur (21 à 23) par rapport à au moins un trou à fond plat (31 à 37) de diamètre inférieur ou égal à 1,2 mm.

10. Utilisation du procédé de l'une quelconque des revendications 1 à 8 pour donner une garantie de santé de tout l'intérieur d'une barre en alliage de titane de diamètre compris entre 50 et 400 mm à l'exception d'une zone superficielle extérieure de cette profondeur inférieure à 10 mm, ce procédé de contrôle étant qualifié par rapport à au moins un trou à fond plat de diamètre inférieur ou égal à 1 mm et de préférence compris entre 0,7 et 1 mm.

## Patentansprüche

1. Verfahren zur Ultraschallprüfung im Tauchbad des Gesundheitszustandes einer Metallstange (4, 24, 26) mittels mehrerer Wandler (2, 20, 21 bis 23), welche fokussierte Ultraschallwellen in die Stange senden und Fokalflecken (9, 10) bilden, die je nach der in der Stange zu prüfenden Tiefe stufenförmig verteilt sind, dadurch gekennzeichnet, daß nach erfolgter Regelung
- des quer zur Ausbreitungsachse (15) der Ultraschallwellen gemessenen Querschnitts (S) jedes Fokalfleckens bei -6dB auf höchstens 25 mm²,
- der Frequenz jedes mit hohem Energiestrahl fokussierenden Wandlers (20 bis 23) zwischen 3 und 8 Mhz,
- der Beoabachtungstiefenabstände anhand eines Eichmaßes, so daß die Überdeckung jedes Fokalfleckens (9, 10) bei -6dB in der Tiefe gewährleistet ist,
der gesamte Innenraum der Stange (26) mit Ausnahme eines weniger als 10 mm tiefen Oberflächenbereiches geprüft wird, indem alle Wandler (21 bis 23) in Bezug auf das Teil (26) verschoben werden, so daß sich ein Prüfabstand mit einer Länge von kleiner oder gleich 0,7 mal die Quadratwurzel des Querschnitts (S) des Fokalfleckens bei -6dB für jeden der Wandler (21 bis 23) ergibt.

2. Verfahren nach Anspruch 1, bei dem jeder Wandler (2, 20, 21 bis 23) eine emittierende Oberfläche (1, 10) aufweist, deren Punkte (P) sich in einem im Wasser und in dem Teil (4, 24, 26) gemessenen, von der Mitte (F) jedes Fokalfleckens (9,10) gleichbleibenden Schallabstand befinden.

3. Verfahren nach Anspruch 2, bei dem die emittierende Oberfläche (10) Bestandteil einer piezoelektrischen Anschlußfläche (60) ist, welche gekreuzte Nuten (14) aufweist, die mit Kunststoff (15) gefüllt sind und in die Fläche (10) münden.

4. Verfahren nach einem der Ansprüche 2 oder 3, bei dem Ultraschall-Längswellen verwendet werden, wobei jeder Wandler (2, 20, 21 bis 23) Wellen aussendet, welche sich in einer zur Oberfläche des Teiles (4, 24, 26) annähernd quer verlaufenden Richtung ausbreiten, und die Wellen erfaßt, die in dem Teil reflektiert werden.

5. Verfahren nach einem der Ansprüche 1 bis 4, bei dem das Teil (26) eine Stange (26) aus Ti-Legierung mit einem Durchmesser von 50 bis 400 mm ist.

6. Verfahren nach Anspruch 1, bei dem die Prüfgenauigkeit dadurch verbessert wird, daß der Beobachtungstiefenabstand jedes Wandlers auf einen Fokussierungstiefenanteil bei -6dB jedes Wandlers geregelt wird.

7. Verfahren nach Anspruch 6 zur Prüfung einer Stange (26) mit einem Durchmesser von 250 bis 400 mm, bei dem der Abstand auf 1/15 bis 1/2 der Fokussierungstiefe bei -6dB geregelt wird.

8. Verfahren nach Anspruch 1 oder 7, bei dem der gesamte Innenraum der Stange (26) mit Ausnahme eines 1,5 bis 10 mm tiefen Oberflächenbereiches geprüft wird, indem alle Wandler (21 bis 23) parallel zur Längsachse (25) der Stange (26) verschoben werden und die Stange gleichzeitig um sich selbst gedreht wird, so daß eine Prüfung entlang der spiralförmigen Bahnen der Wandler (21 bis 23) in Bezug auf die Stange (26) erfolgt, wobei diese Bahnen einen gleichen Längenabstand aufweisen, der kleiner oder gleich 0,7 mal die Quadratwurzel des Querschnitts des Fokalfleckens bei -6dB jedes Wandlers (21 bis 23) ist.

9. Anwendung des Verfahrens nach einem der Ansprüche 1 bis 4 zur Gewährleistung des einwandfreien Gesundheitszustandes des gesamten Innenraumes einer Metallstange (26) mit Ausnahme eines weniger als 10 mm tiefen Oberflächenbereiches dieses Teiles, wobei dieses Verfahren für jeden Wandler (21 bis 23) in Bezug auf mindestens ein Flachbodenloch (31 bis 37) mit einem Durchmesser von kleiner oder gleich 1,2 mm geeignet ist.

10. Anwendung des Verfahrens nach einem der Ansprüche 1 bis 8 zur Gewährleistung des einwandfreien Gesundheitszustandes des gesamten Innenraumes einer Stange aus Titanlegierung mit einem Durchmesser von 50 bis 400 mm, mit Ausnahme eines äußeren Oberflächenbereiches dieser weniger als 10 mm betragenden Tiefe, wobei dieses Prüfverfahren in Bezug auf mindestens ein Flachbodenloch mit einem Durchmesser von kleiner oder gleich 1 mm, vorzugsweise 0,7 bis 1 mm, geeignet ist.

## Claims

1. Method of ultrasonic testing in immersion of the soundness of a metal rod (4, 24, 26) using several transducers (2, 20, 21 to 23) emitting ultrasonic waves focused in the rod and forming focal spots (9, 10) graduated according to the depth to be tested in said rod, characterised in that, after adjusting:
• the cross section (S) of each focal spot at -6dB, measured perpendicularly to the axis of propagation (15) of the ultrasonic waves, to at most 25 mm²,
• the frequency of each transducer (20 to 23) focusing to a high beam of energy to between 3 and 8 Mhz,
• the depth of observation intervals from a reference standard so as to ensure the depth coverage of each focal spot (9, 10) to -6dB,
the entire internal volume of the rod (26) is tested with the exception of a surface region having a depth smaller than 10 mm by displacing all said transducers (21 to 23) relative to the part (26) so as to obtain a test increment having a length smaller than or equal to 0.7 times the square root of said cross section (S) of the focal spot at -6dB of each of said transducers (21 to 23).

2. Method according to claim 1 in which each of said transducers (2, 20, 21 to 23) has an emitting surface (1, 10) of which the points (P) are at a constant acoustic distance, measured in water and in the part (4, 24, 26), from the centre (F) of each said focal spot (9, 10).

3. Method according to claim 2 in which said emitting surface (10) belongs to a piezoelectric pellet (60) comprising intersecting grooves (14) filled with plastics material (15) and opening onto said surface (10).

4. Method according to any one of claims 2 to 3, in which longitudinal ultrasonic waves are used, each transducer (2, 20, 21 to 23) emitting waves which are propagated in a direction close to a perpendicular to the surface of the part (4, 24, 26) and detecting the waves reflected in the part.

5. Method according to any one of claims 1 to 4, in which said part (26) is a rod (26) of Ti alloy having a diameter between 50 and 400 mm.

6. Method according to claim 1 in which the accuracy of testing is improved by adjusting the depth of observation interval of each transducer to a fraction of the focusing depth at -6dB of said transducer.

7. Method according to claim 6 applied to the testing of a rod (26) having a diameter between 250 and 400 mm, in which said interval is adjusted to 1/15 to 1/2 of said focusing depth at - 6dB.

8. Method according to claim 1 or 7 in which the entire internal volume of the rod (26) is tested with the exception of a surface region having a depth selected between 1.5 and 10 mm by displacing all the transducers (21 to 23) with translation parallel to the longitudinal axis (25) of the rod (26) and by simultaneously causing the rod to turn on itself so as to perform testing in helical courses of said transducers (21 to 23) relative to the rod (26), these courses having a same increment with a length smaller than or equal to 0.7 times the square root of said cross section of the focal spot at -6dB of each of the transducers (21 to 23).

9. Use of the method according to any one of claims 1 to 4 to guarantee the soundness of the entire interior of a metal rod (26) with the exception of a surface region of this part having a depth smaller than 10 mm, this method of testing being qualified for each transducer (21 to 23) relative to at least one flat-bottomed hole (31 to 37) having a diameter smaller than or equal to 1.2 mm.

10. Use of the method according to any one of claims 1 to 8 to guarantee the soundness of the entire interior of a rod of titanium alloy having a diameter between 50 and 400 mm with the exception of an external surface region of this depth smaller than 10 mm, this method of testing being qualified relative to at least one flat-bottomed hole having a diameter smaller than or equal to 1 mm and preferably between 0.7 and 1 mm.
